# EUROPÄISCHE PATENTSCHRIFT

(11) **EP 2 582 563 B1**
(45) Veröffentlichungstag und Bekanntmachung des Hinweises auf die Patenterteilung: **30.04.2014**
(21) Anmeldenummer: 11729908.1
(22) Anmeldetag: 17.06.2011
(51) Int. Cl.: B62D 5/04, B62D 1/19

(54) **ELEKTRISCHE SERVOLENKUNG**
ELECTRIC POWER STEERING
DIRECTION ASSISTÉE ÉLECTRIQUE

(30) Priorität: 18.06.2010 DE 102010024353
(43) Veröffentlichungstag der Anmeldung: 24.04.2013
(73) Patentinhaber: ThyssenKrupp Presta AG, 9492 Eschen (LI)
(72) Erfinder: KLUKOWSKI, Christoph, FL-9487 Gamprin (LI); SCHÖNLECHNER, Johannes, A-6793 Gaschurn (AT); ACKERMANN, Rolf, CH-8887 Mels (CH)
(74) Vertreter: Lenzing Gerber Stute
(86) Internationale Anmeldenummer: PCT/EP2011/003008
(87) Internationale Veröffentlichungsnummer: WO 2011/157440

(56) Entgegenhaltungen:
- EP-A1- 1 693 280
- WO-A1-2005/005231
- DE-U1-202008 015 444

## Beschreibung

Die vorliegende Erfindung betrifft ein Lenksystem für ein Kraftfahrzeug mit elektrischer Hilfskraftunterstützung umfassend: eine Lenkspindellagereinheit, die die Lenkspindel drehbar lagert und in einem Schlitten geführt ist, der mit der Fahrzeugkarosserie verbindbar ist, wobei die Lenkspindellagereinheit zumindest in der Neigung gegenüber dem Schlitten verstellbar ist, einen Elektromotor, der über ein Untersetzungsgetriebe mit einer Lenkspindel drehbar gekoppelt ist, wobei das Untersetzungsgetriebe von einem Gehäuse umschlossen und gelagert ist, wobei das Gehäuse ein Mittel zur Bildung einer Schwenkachse aufweist, um die die Lenkspindellagereinheit in ihrer Neigung verstellbar ist und wobei das Lenksystem weiter eine Halteklammer umfasst, zur Befestigung des Lenksystems am Kraftfahrzeug, wobei die Halteklammer eine Führungsbahn aufweist, die mit einer am Schlitten angeordneten Gegenführung zusammenwirkt, wobei der Schlitten nach Überwindung einer vorgebbaren Lösekraft entlang der Führungsbahn verschiebbar ist.

In der EP2050654A1 ist ein Lenksystem offenbart, das zwei ineinander geschobene Säulenteile zur Lagerung der Lenkspindel besitzt, die im Falle eines Crashs unter Energieabsorption zusammengeschoben werden. Entsprechend wird die Lenkspindel im Crashfall in ihrer Längsrichtung zur Fahrzeugfront hin verschoben. Diese Lösung besitzt den Nachteil, dass die Richtung der Verschiebung der Lenkspindellagereinheit nicht nach den Erfordernissen eingestellt werden kann. Insbesondere ist diese Richtung abhängig von der jeweils vor Beginn des Crashs eingestellten Neigung der Lenkspindellagereinheit.

Das Dokument WO 2005/005231 A1 beschreibt eine gattungsgemäße Lenksäule, bei der der Schlitten im Falle eines Crashs entlang der Führungsbahn verschiebbar ist. Es sind keine Vorkehrungen getroffen, um das Risiko einer Kollision des Fahrers mit dem Untersetzungsgetriebe zu verringern.

### Aufgabe der Erfindung

Die Aufgabe der Erfindung besteht darin, ein Lenksystem bereitzustellen, bei dem die Verschiebung der Lenkspindel im Crashfall in eine festlegbare Verschiebungsrichtung erfolgt und das Risiko einer Kollision des Fahrers mit dem Untersetzungsgetriebe verringert wird.

### Lösungsansatz

Gelöst wird die Aufgabe durch ein Lenksystem mit den Merkmalen des Patenanspruchs 1. In den Unteransprüchen sind vorteilhafte Weiterbildungen der Erfindung dargestellt.

Das Lenksystem umfasst eine Halteklammer zur Befestigung des Lenksystems am Kraftfahrzeug, wobei die Halteklammer eine Führungsbahn aufweist, die mit einer am Schlitten angeordneten Gegenführung zusammenwirkt, wobei der Schlitten nach Überwindung einer vorgebbaren Lösekraft entlang der Führungsbahn verschiebbar ist.

Bei dem Lenksystem ist die Lenkspindellagereinheit, im ins Kraftfahrzeug eingebauten Zustand, zumindest in ihrer Neigung gegenüber der Karosserie des Kraftfahrzeuges verstellbar und ist im Crashfall, nach Überschreiten einer vorgebbaren Kraft, in eine gewünschte Richtung gegenüber dem Kraftfahrzeug verschiebbar.

Das Lenksystem ist erfindungsgemäß so ausgebildet, dass im Falle der Verschiebung des Schlittens entlang der Führungsbahn die Schwenkachse in Bezug zur Halteklammer nach oben, im Hinblick auf die Einbaulage im Kraftfahrzeug, bewegt wird. Dadurch kann das Verletzungsrisiko des Fahrers durch Kontakt mit dem Gehäuse des Reduktionsgetriebes verringert werden. Insbesondere wird mit Vorzug die Schwenkachse im Crashfall auch in Richtung weg von der zwischen dem Fahrgastinnenraum und dem Motorraum angeordneten Spritzwand bewegt.

Im einfachsten Fall sind die Mittel zur Bildung der Schwenkachse durch eine Bohrung am Gehäuse gebildet die von einem Schwenkbolzen durchsetzt ist und an der fahrzeugfesten Halterung abgestützt wird.

Mit Vorzug ist die Führungsbahn in Einbaulage im Kraftfahrzeug etwa in horizontale Richtung ausgerichtet, so dass die Verschiebung etwa in horizontaler Richtung erfolgt.

Mit Vorzug wird diese Bewegung der Schwenkachse im Crashfall durch eine einfache Führung der Schwenkachse dargestellt. Hierzu sind im Schlitten wenigstens ein erstes Langloch und in der Halteklammer wenigstens ein zweites Langloch angeordnet, wobei diese beiden Langlöcher von einem Schwenkbolzen, der von den Mitteln zur Bildung der Schwenkachse gehalten ist, durchsetzt sind und diese Langlöcher zueinander in einem Winkel von mehr als 20°, bevorzugt mehr als 60°, ausgerichtet sind. Durch die Bewegung des Schlittens in Bezug zur Halteklammer wird der Schwenkbolzen innerhalb der sich scherenartig überdeckenden Langlöcher verschoben und auf diese Weise die Lage der Schwenkachse verschoben. Durch die Ausrichtung der Langlöcher kann die Bahn, die der Schwenkbolzen, und damit die Schwenkachse im Crashfall durchläuft, festgelegt werden. Da die Schwenkachse durch die Mittel zur Bildung der Schwenkachse mit dem Gehäuse verbunden sind, wird mit der Schwenkachse auch das Gehäuse und entsprechend das Untersetzungsgetriebe verschoben. Mit Vorzug ist der Elektromotor am Gehäuse festgelegt, oder weiter bevorzugt in das Gehäuse mit integriert. Durch diese Verbindung wird mit der Schwenkachse die gesamte Hilfskraftunterstützungseinrichtung (=Servoeinheit) verschoben.

In der bevorzugten Ausführungsform umfasst die Halteklammer einen Bodenbereich, an dem zwei Seitenwangen angeordnet sind, die senkrecht zum Bodenbereich ausgerichtet sind. Zwischen den beiden Seitenwangen werden Seitenschenkel des Schlittens aufgenommen. In dieser Ausführungsform sind mit Vorzug in beiden Seitenwangen der Halteklammer und in beiden Seitenschenkeln des Schlittens Langlöcher ausgebildet, die von einem einzigen Schwenkbolzen durchsetzt sind. Der Schwenkbolzen ist drehbar in einer oder auch zwei Bohrungen im Gehäuse gehalten. Der Bolzen kann dabei in einem Gleitlager gelagert oder auch fixiert sein. Denkbar und möglich wäre es auch, nur jeweils eine Seitenwange und einen Seitenschenkel vorzusehen, wobei diese auch mittig zum Lenksystem ausgerichtet sein können.

In einer bevorzugen Ausführungsform ist die Lenkspindellagereinheit auch in Längsrichtung der Lenkspindel gegenüber dem Schlitten verstellbar.

Mit Vorzug umfasst das das Lenksystem eine Fixiereinrichtung, die zwischen einer Öffnungsstellung und einer Schließstellungen verstellbar ist, wobei in der Öffnungsstellung die Lenkspindellagereinheit gegenüber dem Schlitten verschiebbar ist und in der Schließstellung mittels Reibschluss oder Formschluss gegenüber dem Schlitten unverschiebbar gehalten ist.

Weiter ist es zu bevorzugen an der Lenkspindellagereinheit beidseits Haltewangen vorzusehen, die am Gehäuse befestigt sind und mit Seitenflächen der Lenkspindellagereinheit in Kontakt stehen, wobei die Haltewangen Langlöcher aufweisen, die von einem Spannbolzen durchsetzt sind und mit dem Schlitten und der Lenkspindellagereinheit reibschlüssig verbunden sind. Auf diese Weise wird die Steifigkeit der Anordnung erhöht. Insbesondere sind das Untersetzungsgetriebe und der Elektromotor an diesen Haltewangen abgestützt.

Mit Vorzug sind im Lenksystem Mittel zur Energieabsorption vorgesehen, die im Falle der Verschiebung des Schlittens gegenüber der Halteklammer Energie absorbieren.

Diese Mittel können durch einen Biegestreifen und oder eine Biegereißlasche gebildet sein. Dabei besteht der Streifen oder die Lasche aus einem gebogenen Blech, das einen gebogenen Abschnitt und zwei daran anschließende gerade Abschnitte, die auch als Enden bezeichnet werden können, aufweist. Das eine Ende des Streifens bzw. der Lasche ist an der Halteklammer befestigt. Das andere, bevorzugt u-förmig zurückgebogene, Ende des Streifens bzw. der Lasche ist am Schlitten befestigt. Im Crashfall werden die beiden Enden gegeneinander verschoben, wobei sich der Streifen unter Verlagerung des gebogenen Abschnitts verformt. Dabei kann auch ein Teil des Streifens aus einer Grundplatte herausgerissen werden.

Anhand der Figuren werden Ausführungsbeispiele der Erfindung erläutert.

Es zeigen:
- Fig. 1: ein Ausführungsbeispiel der Erfindung in einer Ansicht von der hinteren Seite des Kraftfahrzeugs gesehen;
- Fig. 2: das Lenksystem entsprechend der Fig. 1 in einer Ansicht von der Front des Kraftfahrzeugs gesehen;
- Fig. 3: das Lenksystem entsprechend der Fig. 1 in einer Seitenansicht des Ausführungsbeispiels in einer Situation vor dem Crash bei einer eingestellten Längenposition der Lenkspindel;
- Fig. 4: das Lenksystem entsprechend der Fig. 1 in einer Seitenansicht des Ausführungsbeispiels in einer Situation nach dem Crash;
- Fig. 5: das Lenksystem entsprechend der Fig. 1 in einer Seitenansicht des Ausführungsbeispiels in einer Situation bei einer eingestellten Längenposition und in der höchsten Einstellposition der Lenkspindel;
- Fig. 6: das Lenksystem entsprechend der Fig. 1 in einer Seitenansicht des Ausführungsbeispiels in einer Situation bei einer eingestellten Längenposition und in der niedrigsten Einstellposition der Lenkspindel;
- Fig. 7: das Lenksystem entsprechend der Fig. 1 in einer Seitenansicht des Ausführungsbeispiels in einer Situation vor dem Crash bei einer eingestellten Längenposition der Lenkspindel, wobei die Halteklammer nicht dargestellt ist;
- Fig. 8: das Lenksystem entsprechend der Fig. 1 in einer Seitenansicht des Ausführungsbeispiels in einer Situation nach dem Crash, wobei die Halteklammer nicht dargestellt ist;
- Fig. 9: das Lenksystem entsprechend der Fig. 1 in einer Ansicht auf die Biegereißlasche;
- Fig. 10: das Lenksystem analog der Fig. 1 in einer Ansicht auf die Biegereißlasche, die in einer alternativen Ausführung befestigt ist;
- Fig. 11: Ausschnitt aus Halterklammer mit Ansicht eines Ausschnitts der Führungsbahn.

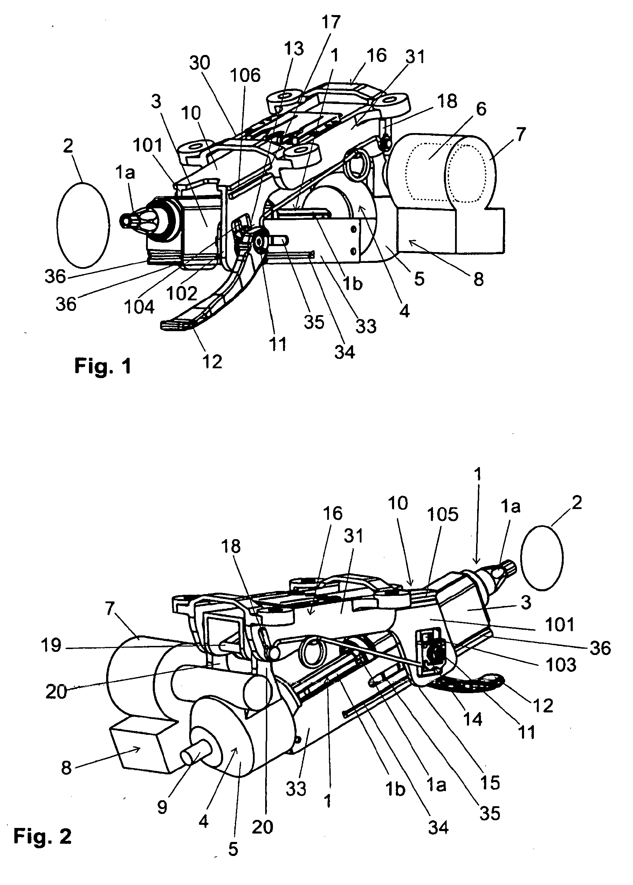

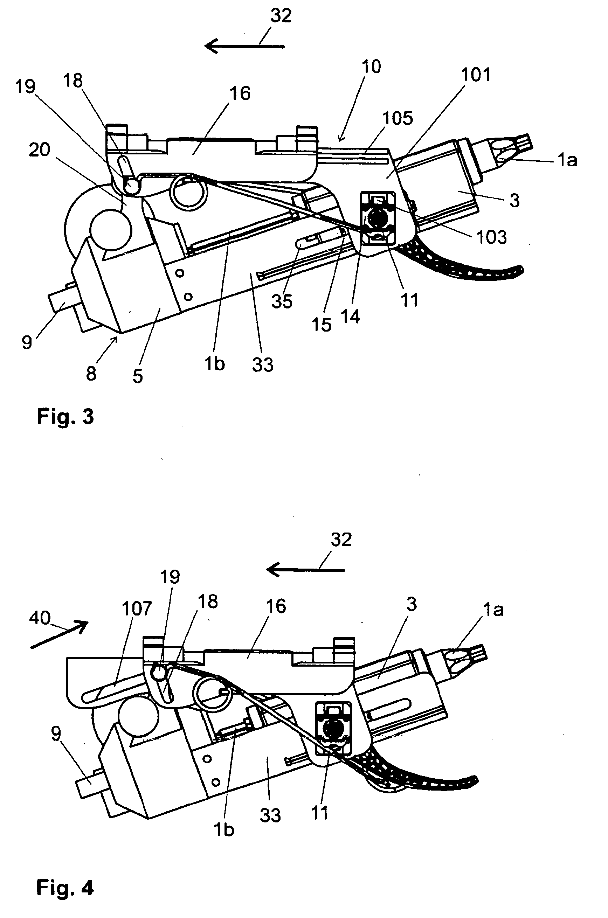

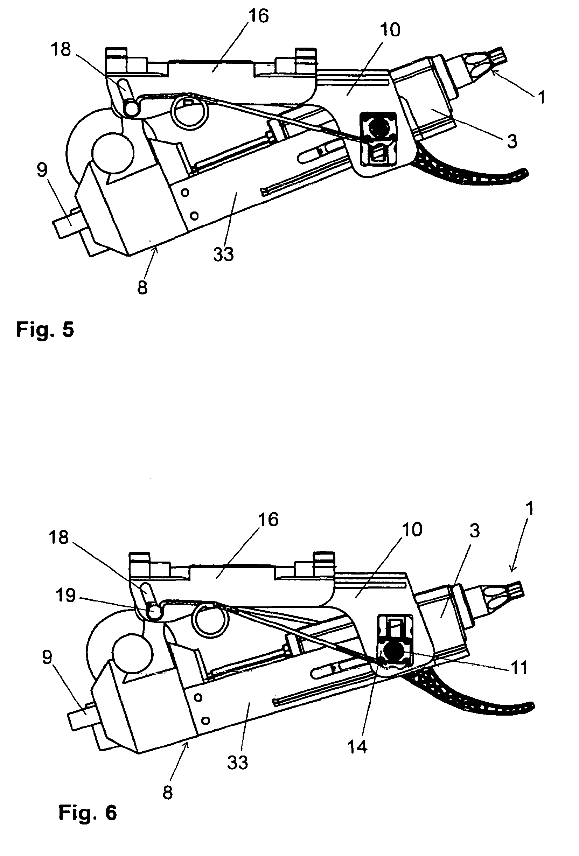

In den Figuren 1-9 ist das erste Ausführungsbeispiel der Erfindung dargestellt. Das Lenksystem umfasst eine Lenkspindel 1, an der das Lenkrad 2 befestigt werden kann. Die Lenkspindel 1 umfasst ein oberes Lenkspindelteil 1a und ein unteres Lenkspindelteil 1b, die zueinander verschiebbar sind. Das Lenkrad 2 kann an dem oberen Lenkspindelteil 1a befestigt werden. Die Lenkspindel ist in einer Lenkspindellagereinheit 3 drehbar gelagert und wird in ein Untersetzungsgetriebe 4 (nicht genau dargestellt) geführt, das in einem Gehäuse 5 untergebracht ist. Ein gestrichelt dargestellter Elektromotor 6 ist in einem weiteren Gehäuse 7 angeordnet. Der Elektromotor wird aufgrund von Steuersignalen angesteuert und liefert eine entsprechende Unterstützungskraft, zur Unterstützung der Lenkbewegung des Fahrers beim Betätigen des Lenkrades 2. Dazu wird die Ausgangswelle des Elektromotors über das Untersetzungsgetriebe 4 mit der Lenkspindel 1 gekoppelt. Die Figuren veranschaulichen den Elektromotor 6 und das Untersetzungsgetriebe 4 nur stark schematisiert. Derartige Getriebe sind im Stand der Technik bekannt, sodass hier nicht näher darauf eingegangen werden muss. Das Untersetzungsgetriebe 4 und der Elektromotor 6, die in den Gehäusen 5 und 7 aufgenommen sind, bilden zusammen die Servoeinheit 8. An der Ausgangswelle 9 der Servoeinheit 8 schließen sich im Kraftfluss weitere Glieder des Lenksystems an, insbesondere ein Lenkritzel, mit dessen Hilfe eine Zahnstange betätigt wird, die die Verschwenkung der Räder bewirkt (in den Figuren nicht dargestellt). Die Lenkspindellagereinheit 3 wird in einem Schlitten 10 mit Seitenschenkeln 101, 102 gehalten. Der Schlitten besitzt Langlöcher 103, 104 in seinen Seitenschenkeln 101 beziehungsweise 102. Diese Seitenschenkel werden von einem Spannbolzen 11 durchsetzt, der mit einem Spannhebel 12 verdreht werden kann. Durch eine Nocken-Nockenfolger-Paarung, wie sie im Stand der Technik bekannt ist, wird bei Verdrehung des Spannbolzens 11, der Nocken gegenüber dem Nockenfolger verdreht, sodass der Spannbolzen 11 axial verschoben wird. In der Schließstellung wird die Druckplatte 14 gegen die Nocken- Nockenfolger- Paarung gedrückt, wodurch die beiden Seitenschenkel 101, 102 gegen die Seitenflächen der Lenkspindellagereinheit 3 gepresst werden. In der Öffnungsstellung der Fixiereinrichtung, die in den Figuren nicht dargestellt ist, ist das Nocken-Nockenfolger-Paar 13 derart zueinander verdreht, dass die Druckplatte 14 nicht mehr gegen die Seitenschenkel 101 gepresst wird und damit die Lenkspindellagereinheit gegenüber dem Schlitten 10 entlang den Langlöchern 103, 104 in den Seitenschenkel 101 beziehungsweise 102 verschiebbar ist.

Im gezeigten Ausführungsbeispiel sind in der Lenkspindellagereinheit 3 Langlöcher 15 ausgebildet, die von dem Spannbolzen 11 durchsetzt sind und auf diese Weise eine Verschiebung der Lenkspindellagereinheit 3 in der Längsrichtung der Lenkspindel 1 ermöglichen. Das erfindungsgemäße Lenksystem kann ohne diese Längsverstellung ausgebildet sein. Eine Lösung, ohne die Langlochausnehmungen 15, in der Lenkspindellagereinheit 3 ist denkbar und möglich. Es könnte auch ein geteilter Spannbolzen verwendet werden, der nicht die Lenkspindellagereinheit durchsetzt.

Zur Darstellung der Längenverschiebbarkeit (= Verschiebbarkeit der Lenkspindel in ihrer Längsrichtung) ist die Lenkspindel 1 zweigeteilt. Wobei der obere Teil der Lenkspindel 1a in der Lenkspindellagereinheit gelagert ist und der untere Teil der Lenkspindel 1b mit dem oberen Teil der Lenkspindel drehfest, aber in Axialrichtung verschiebbar verbunden ist. Der untere Teil der Lenkspindel 1b ist mit dem Untersetzungsgetriebe drehfest verbunden. Diese Ausbildung der Lenkspindel 1 ist auch für den Crashfall von Vorteil.

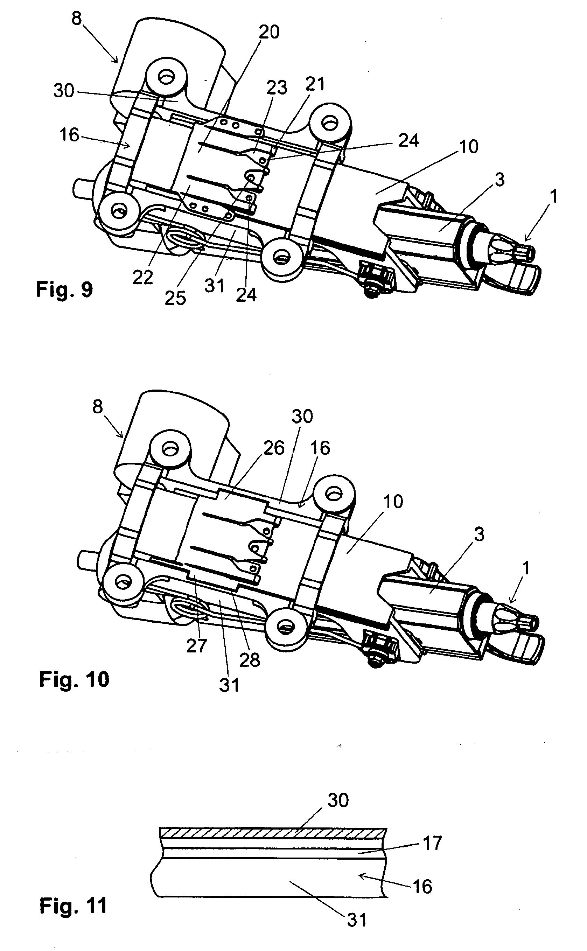

Zur Befestigung des Lenksystems am Kraftfahrzeug ist eine Halteklammer 16 vorgesehen. Die Halteklammer 16 umfasst einen Bodenbereich 30 und beidseits etwa senkrecht dazu angeordnete Seitenwangen 31. In den Seitenwangen 31 ist jeweils eine Führungsbahn 17 angeordnet, die durch einen Steg gebildet wird und in horizontaler Richtung in Einbaulage im Kraftfahrzeug verläuft (vergleiche auch Figur 11). Diese Führungsbahn verläuft in die Verschieberichtung 32, die beim Design des Lenksystem festgelegt werden kann. Die Führungsbahnen 17 stehen im Eingriff mit Gegenführungen 105, 106, die in den Seitenschenkeln 101 beziehungsweise 102 ausgebildet sind. Weiters sind in den Seitenschenkeln 101, 102 des Schlittens, Langlöcher 107 angeordnet, die sich etwa parallel in Richtung der Längsachse der Lenkspindel 1 erstrecken. Hierbei ist zu beachten, dass die Längsrichtung der Lenkspindel bei der Neigungsverstellung der Lenkspindel sich verändert, sodass die beiden Richtungen im günstigsten Fall nur in einer einzigen Verstellposition übereinstimmen können. Es ist auch nicht zwingend zur Ausführung der Erfindung, dass diese beiden Richtungen für irgendeine der möglichen Verstellpositionen der Lenkspindel übereinstimmen müssen.

Die Halteklammer 16 weist in ihren Seitenwangen 31 Langlöcher 18 auf, die sich scherenartig mit den Langlöcher 107 in den Seitenschenkeln 101, 102 des Schlittens 10 kreuzen. Die Langlöcher 107 und 18 werden durch den Schwenkbolzen 19 durchsetzt, der in Bohrungen in Aufnahmelaschen 20 am Gehäuse 5 des Untersetzungsgetriebes 4 befestigt ist.

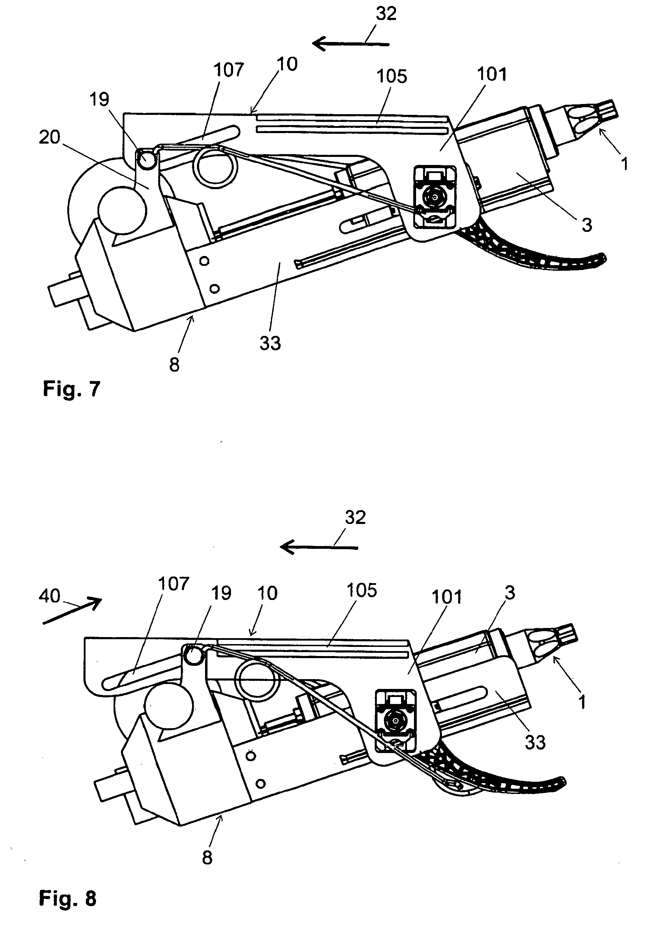

Im Ausführungsbeispiel sind die Führungsbahnen 17 der Halteklammer 16 den Gegenführungen 105, 106 reibschlüssig verklemmt. Wird im Crashfall der Fahrer auf das Lenkrad 2 gestossen, so überträgt er seine Energie auf die Lenkspindel 1 und durch die Fixierung im Fixiersystem auf den Schlitten 10. Nach Überschreiten einer vordefinierten Kraft, wird der Reibschluss der Führungsbahnen 17 in den Gegenführungen 105, 106 überwunden und der Schlitten 10 wird entlang der Führungsbahn 17 in der Halteklammer 16 in Verschieberichtung 32 zur Fahrzeugfront bewegt. Dabei wird die obere Lenkspindel 1a über die untere Lenkspindel 1b verschoben und das Langloch 107 in Richtung zur Fahrzeugfront verschoben. Dies ist besonders gut im Vergleich zwischen den Figuren 7 und 8 veranschaulicht, da die Figur 7 eine Situation vor dem Crash und die Figur 8 eine Situation nach dem Crash darstellt. Da der Schwenkbolzen 19 in den Langlöcher 18 der Halteklammer und in den Langlöcher 107 des Schlittens geführt ist, wird bei dieser Vorwärtsbewegung der Schwenkbolzen 19 im gezeigten Ausführungsbeispiel nach oben verschoben. Entsprechend wird die Servoeinheit 8 nach oben in Richtung 40 verschoben. Damit bleibt die Beinfreiheit für den Fahrer des Kraftfahrzeugs im Crashfall gewährleistet.

Zur Energieabsorption kann neben dem Reibschluss zwischen der Führungsbahn und der Gegenführung eine Biegereisslasche 20 (Figur 9 und 10) vorgesehen sein. Die Biegereisslasche besitzt einen (oder wie im Beispiel gezeigten mehrere) gebogene Abschnitte 21 und sich daran anschließende Endabschnitte 22 und 23. Der eine Endabschnitt 22 ist an der Halteklammer 16 durch Vernietung oder Verschraubung befestigt. Der zweite Endabschnitt 23 ist über Verschraubungen oder Vernietungen 24 mit dem Schlitten 10 verbunden. In einer bevorzugten Ausführungsform ist eine Befestigungspunkt 25 vorgesehen, der über einen pyrotechnischen Schalter lastabhängig gesteuert, ein- oder ausgeschaltet werden kann und eine Verbindung zwischen dem Endabschnitt 23 der Lasche mit dem Schlitten 10 herstellt.

Die Figur 10 zeigt eine alternative Ausführungsform, die im Wesentlichen analog zur Figur 9 ist, allerdings ist die Biegereisslasche 26 durch die Umfalzung 27 formschlüssig in eine Nut 28 in die Halteklammer 16 eingelassen und somit mit der Halteklammer formschlüssig verbunden. Auf diese Weise können Verschraubungen eingespart werden. Die Nut 28 kann in einfacher Weise in das Gussteil, dass die Halteklammer 16 bildet, bei der Gussoperation eingearbeitet werden. Wenn der Falz 27 entsprechend scharfkantig ausgebildet ist, ist es möglich durch eine entsprechende Einschneidoperation einen spielfreien Formschluss sicherzustellen, ohne das im Gussteil eine aufwendige zerspannende Bearbeitung erforderlich ist.

Zur Erhöhung der Steifigkeit des Lenksystems können Haltewangen 33 vorgesehen sein, die von den Seitenschenkeln 101, 102 des Schlittens 10 aufgenommen werden und am Gehäuse 5 befestigt sind. Diese parallel zur Achse der Lenkspindel 1 verlaufenden Haltewangen 33 sind bevorzugt im Wesentlichen eben ausgeführt. Zwischen den beiden Haltewangen 33 wird die Lenkspindellagereinheit 3 aufgenommen und geführt. Zusätzliche Führungen 34 sind im Beispiel in den Haltewangen 33 ausgebildet. Diese Führungen 34 in den Haltewangen greifen in Führungen 36 an der Lenkspindellagereinheit ein, um eine gute Führung der Lenkspindellagereinheit bei einer Längsverstellung der Lenkspindel 1 gegenüber der Halteklammer 16 zu gewährleisten. Um die Verstellbarkeit in Längsrichtung darzustellen, sind in den Haltewangen 33 entsprechende Langlöcher 35, die vom Spannbolzen 11 durchsetzt sind, vorgesehen. Auf diese Weise wird eine zusätzliche Verstärkung der gesamten Baugruppe erreicht.

Im Falle, dass das Lenksystem Haltewangen 33 aufweist, werden diese Haltewangen bevorzugt durch das Fixiersystem in Schließstellung gemeinsam mit den Seitenschenkeln 101, 102 des Schlittens 10 gegen die Seitenflächen der Lenkspindellagereinheit 3 gepresst. Die Haltewangen 33 sind entsprechend im Kraftfluss zwischen den Seitenschenkeln 101, 102 und der Lenkspindellagereinheit 3 angeordnet.

Soweit anwendbar bzw. ausführbar können alle unterschiedlichen einzelnen Merkmale der verschiedenen Beispiele untereinander ausgetauscht und/oder kombiniert werden, ohne den Bereich der Erfindung zu verlassen.

## Patentansprüche

1. Lenksystem für ein Kraftfahrzeug mit elektrischer Hilfskraftunterstützung umfassend:
- eine Lenkspindellagereinheit (3), die eine Lenkspindel drehbar lagert und in einem Schlitten (10) geführt ist, der mit der Fahrzeugkarosserie verbindbar ist, wobei die Lenkspindellagereinheit (3) zumindest in der Neigung gegenüber dem Schlitten (10) verstellbar ist,
- einen Elektromotor (6), der über ein Untersetzungsgetriebe (4) mit der Lenkspindel (1) drehbar gekoppelt ist, wobei das Untersetzungsgetriebe (4) von einem Gehäuse (5) umschlossen und gelagert ist,
- wobei das Gehäuse (5) ein Mittel zur Bildung einer Schwenkachse aufweist, um die die Lenkspindellagereinheit (3) in ihrer Neigung verstellbar ist,
- das Lenksystem weiter eine Halteklammer (16) zur Befestigung des Lenksystems am Kraftfahrzeug umfasst, und die Halteklammer (16) wenigstens eine Führungsbahn (17) aufweist, die mit wenigstens einer am Schlitten (10) angeordneten Gegenführung (105, 106) zusammenwirkt,
- wobei der Schlitten nach (10) Überwindung einer vorgebbaren Lösekraft entlang der Führungsbahn (17) verschiebbar ist,
**dadurch gekennzeichnet, dass**
- im Falle der Verschiebung des Schlittens (10) entlang der Führungsbahn (17) die Schwenkachse in Bezug zur Halteklammer (16) nach oben bewegt wird.

2. Lenksystem nach Anspruch 1, **dadurch gekennzeichnet, dass** im Schlitten (10) wenigstens ein erstes Langloch (107) und in der Halteklammer (16) wenigstens ein zweites Langloch (18) angeordnet ist, wobei das wenigstens eine erste Langloch (107) und das wenigstens eine zweite Langloch (18) von einem Schwenkbolzen (19), der von den Mitteln zur Bildung der Schwenkachse gehalten ist, durchsetzt sind und diese Langlöcher (107, 18) zueinander in einem Winkel von mehr als 20°, bevorzugt mehr als 60°, ausgerichtet sind.

3. Lenksystem nach einem oder mehreren der vorhergehenden Ansprüche, **dadurch gekennzeichnet, dass** die Lenkspindellagereinheit (3) in Längsrichtung der Lenkspindel (1) gegenüber dem Schlitten (10) verstellbar ist.

4. Lenksystem nach einem oder mehreren der vorhergehenden Ansprüche, **dadurch gekennzeichnet, dass** das Lenksystem eine Fixiereinrichtung umfasst, die zwischen einer Öffnungsstellung und einer Schließstellungen verstellbar ist, wobei in der Öffnungsstellung die Lenkspindellagereinheit (3) gegenüber dem Schlitten (10) verschiebbar ist und in der Schließstellung mittels Reibschluss oder Formschluss gegenüber dem Schlitten (10) unverschiebbar gehalten ist.

5. Lenksystem nach einem oder mehreren der vorhergehenden Ansprüche, **dadurch gekennzeichnet, dass** beidseits der Lenkspindellagereinheit (3) Haltewangen (33) angeordnet sind, die am Gehäuse (5) befestigt sind und mit Seitenflächen der Lenkspindellagereinheit (3) in Kontakt stehen, wobei die Haltewangen (33) Langlöcher (35) aufweisen, die von einem Spannbolzen (11) durchsetzt sind und mit dem Schlitten (10) und der Lenkspindellagereinheit (3) reibschlüssig verbunden sind.

6. Lenksystem nach einem oder mehreren der vorhergehenden Ansprüche, **dadurch gekennzeichnet, dass** Mittel zur Energieabsorption vorgesehen sind, die im Falle der Verschiebung des Schlittens (10) gegenüber der Halteklammer (16) Energie absorbieren.

7. Lenksystem nach Anspruch 6, **dadurch gekennzeichnet, dass** die Mittel zur Energieabsorption durch einen Biegestreifen und oder eine Biegereißlasche (20, 26) gebildet sind, wobei ein Ende des Streifens bzw. der Lasche (20, 26) an der Halteklammer (16) befestigt ist und das andere u-förmig zurückgebogene Ende des Streifens bzw. der Lasche (20, 26) am Schlitten (10) befestigt ist.

## Claims

1. Steering system for a motor vehicle with electric power assistance, comprising:
- a steering spindle bearing unit (3) which rotatably mounts a steering spindle, and which is guided in a carriage (10) that can be connected to the vehicle body, wherein the steering spindle bearing unit (3) can be adjusted at least in the tilt with regard to the carriage (10),
- an electric motor (6), which is rotatably coupled to the steering spindle (1) via a reduction gear (4), wherein the reduction gear (4) is enclosed by and mounted in a housing (4),
- wherein the housing (5) comprises a means for forming a pivot axis, around which the steering spindle bearing unit (3) can be adjusted in its tilt,
- the steering system further comprising a retaining bracket (16) for fastening the steering system to the motor vehicle, and the retaining bracket (16) comprising at least one guideway (17) which cooperates with at least one counter guide (105, 106) arranged on the carriage (10),
- wherein the carriage can be moved along the guideway (17) after overcoming a predeterminable release force,
**characterised in that**
- in the case of a displacement of the carriage (10) along the guideway (17), the pivot axis is moved upwards relative to the retaining bracket (16).

2. Steering system according to claim 1, **characterised in that** at least one first long hole (107) is arranged in the carriage (10) and at least one second long hole (18) is arranged in the retaining bracket (16), wherein the at least one first long hole (107) and the at least one second long hole (18) are passed through by a pivot pin (19), which is held by the means for forming the pivot axis, and wherein the first and second long holes (107, 18) are oriented relative to one another at an angle of more than 20°, preferably of more than 60°.

3. Steering system according to one or several of the preceding claims, **characterised in that** the steering spindle bearing unit (3) is adjustable relative to the carriage (10) in a longitudinal direction of the steering spindle (1).

4. Steering system according to one or several of the preceding claims, **characterised in that** the steering system further comprises a fastening device, which is adjustable between an open position and a closed position, wherein in the open position the steering spindle bearing unit (3) is displaceable relative to the carriage (10) and in the closed position is held in a non-relocatable manner by friction fit or by form fit relative to the carriage (10).

5. Steering system according to one or several of the preceding claims, **characterised in that** retaining flanges (33) are arranged on both sides of the steering spindle bearing unit (3), which are fastened to the housing (5) and which are in contact with side surfaces of the steering spindle bearing unit (3), wherein the retaining flanges (33) have long holes (35), which are passed through by a clamping pin (11), and which are connected to the carriage (10) and the steering spindle bearing unit (3) in a frictionally engaged manner.

6. Steering system according to one or several of the preceding claims, **characterised in that** means for absorbing energy are provided, which absorb energy in the case of the displacement of the carriage (10) relative to the retaining bracket (16).

7. Steering system according to claim 6, **characterised in that** the means for absorbing energy are formed by a bending strip and or a bending breaking strap (20, 26), wherein one end of the strip or of the strap (20, 26) is fastened to the retaining bracket and the other u-shaped bent-back end of the strip or strap (20, 26) is fastened to the carriage (10).

## Revendications

1. Système de direction pour véhicule automobile à assistance électrique, comprenant :
- une unité palier d'arbre de direction (3) dans laquelle l'arbre de direction est monté rotatif et qui est guidée dans un coulisseau (10) qui peut être relié à la carrosserie du véhicule, cette unité palier d'arbre de direction (3) étant réglable au moins en inclinaison par rapport au coulisseau (10),
- un moteur électrique (6) couplé rotatif à un arbre de direction (1) par l'intermédiaire d'un réducteur de vitesse (4), ledit réducteur de vitesse (4) étant entouré par un carter (5) et monté dans celui-ci,
- le carter (5) présentant un moyen pour former un axe de pivotement autour duquel l'unité palier d'arbre de direction (3) peut être réglée en inclinaison,
- le système de direction comprend en outre un étrier de retenue (16) permettant de le fixer au véhicule automobile, cet étrier de retenue (16) présentant au moins une glissière de guidage (17) coopérant avec au moins une contre-glissière (105, 106) située sur le coulisseau (10),
- auquel cas le coulisseau (10) peut être déplacé le long de la glissière de guidage (17) par application d'une force de libération prédéfinie,
**caractérisé en ce que**
- l'axe de pivotement est déplacé vers le haut par rapport à l'étrier de retenue (16) en cas de déplacement du coulisseau (10) le long de la glissière de guidage (17).

2. Système de direction conformément à la revendication 1, **caractérisé en ce qu'**au moins un premier trou oblong (107) est agencé dans le coulisseau (10) et qu'au moins un second trou oblong (18) est agencé dans l'étrier de retenue (16), auquel cas le au moins premier trou oblong (107) et le au moins second trou oblong (18) sont traversés par un goujon de pivotement (19) qui est maintenu par le moyen susceptible de former l'axe de pivotement et ces trous oblongs (107, 18) sont orientés l'un vers l'autre en formant un angle supérieur à 20°, de préférence supérieur à 60°.

3. Système de direction conformément à une des revendications précédentes, **caractérisé en ce que** l'unité palier d'arbre de direction (3) est réglable par rapport au coulisseau (10) en direction longitudinale de l'arbre de direction (1).

4. Système de direction conformément à une des revendications précédentes, **caractérisé en ce que** le système de direction comporte un dispositif de fixation qui est réglable entre une position d'ouverture et une position de fermeture, auquel cas l'unité palier d'arbre de direction (3) est réglable par rapport au coulisseau (10) en position d'ouverture et en position de fermeture cette unité palier d'arbre de direction (3) est maintenue par liaison de friction ou liaison de forme de manière à ne pas pouvoir se déplacer par rapport au coulisseau (10).

5. Système de direction conformément à une des revendications précédentes, **caractérisé en ce que** des faces de retenue (33) sont agencées des deux côtés de l'unité palier d'arbre de direction (3), lesquelles sont fixés au carter (5) et qui sont en contact avec les surfaces latérales de l'unité palier d'arbre de direction (3), auquel cas les faces de retenue (33) présentent des trous oblongs (35) qui sont traversés par un boulon de serrage (11) et ces faces de retenue (33) sont reliées par liaison de friction au coulisseau (10) et à l'unité palier d'arbre de direction (3).

6. Système de direction conformément à une des revendications précédentes, **caractérisé en ce que** l'on prévoit des moyens servant à absorber l'énergie qui absorbent l'énergie au cas où le coulisseau (10) se déplace par rapport à l'étrier de retenue (16).

7. Système de direction conformément à la revendication 6, **caractérisé en ce que** les moyens servant à absorber l'énergie sont formés par une bande flexible ou une languette déchirable flexible (20, 26), auquel cas une extrémité de la bande ou de la languette (20, 26) est rattachée à l'étrier de retenue (16) et l'autre extrémité recourbée en forme de U de la bande ou de languette (20, 26) est rattachée au coulisseau (10).
